# EUROPÄISCHE PATENTANMELDUNG

(11) **EP 1 295 768 A2**
(43) Veröffentlichungstag der Anmeldung: **26.03.2003**
(21) Anmeldenummer: 02018047.7
(22) Anmeldetag: 13.08.2002
(51) Int. Cl.: B60T 1/087, B60T 10/02

(54) **Hydrodynamischer Retarder**

(30) Priorität: 16.08.2001 DE 10140264
(71) Anmelder: ZF FRIEDRICHSHAFEN AG, 88038 Friedrichshafen (DE)
(72) Erfinder: Sauter, Frank, 88074 Meckenbeuren (DE)

(57) **Zusammenfassung**

Der hydrodynamische Retarder für ein Kraftfahrzeug weist ein Rotor- und Statorschaufelrad auf, wobei mindestens eine Schaufel (1) des Stators (9) und/oder des Rotors (5) aus zwei Segmenten besteht, wobei das erste Segment (2) direkt mit dem Stator (4) und/oder dem Rotor (5) verbunden und das zweite Segment (3) drehbar gelagert ist, wobei die Drehachse (7) so gewählt ist, dass sich das drehbare Schaufelsegment (3) im Bremsbetrieb durch den Strömungsmittelstrom parallel zur feststehenden Schaufel (2) hin drehbar ist und sich darauf abstützt und im Nichtbremsbetrieb in eine den Strömungsmittelstrom störende Position rückstellbar ist.

## Beschreibung

Die vorliegende Erfindung betrifft einen hydrodynamischen Retarder einer Bremsanlage für ein Kraftfahrzeug gemäß dem Oberbegriff des Patentanspruchs 1.

Neben den Betriebsbremsen eines Fahrzeugs, insbesondere eines Nutzfahrzeugs, die im Regelfall einem Verschleiß unterliegende Reibungsbremsen sind, werden zusätzliche Verzögerungseinrichtungen mehr und mehr auch vom Gesetzgeber gefordert und von den Fahrzeugherstellern angeboten.

Derartige verschleißfreie zusätzliche Verzögerungseinrichtungen in Form von Retardern und Motorbremsen können dazu verwendet werden, die Fahrzeuggeschwindigkeit im Gefälle konstant zu halten.

Zu den Retardern werden sowohl zusätzlich am Getriebe angeordnete hydrodynamische, hydrostatische oder elektrodynamische Bremseinrichtungen gezählt, sowie auch Systeme, die in Form eines "Intarders" innerhalb des Getriebegehäuses vorgesehen sind.

Retarder werden bei Nutzfahrzeugen vor allem eingesetzt, um die beispielsweise bei Bremsung aus hoher Fahrgeschwindigkeit anfallende kinetische Bremsenergie aufzunehmen und in Wärme umzusetzen, sind aber auch für geforderte Dauerbremsleistungen gut geeignet, beispielsweise bei lang andauernder Bergabfahrt.

Bei hydrodynamischen Retardern wird die Strömungsenergie einer Flüssigkeit zum Bremsen benutzt, wobei das physikalische Wirkprinzip dem einer hydrodynamischen Kupplung mit feststehender Turbine entspricht. Demnach weist ein hydrodynamischer Retarder einer sich im Leistungsfluß befindlichen Rotor und einen mit dem Retardergehäuse fest verbundenen Stator auf. Beim Betätigen des Retarders wird eine der gewünschten Bremsleistung entsprechende Ölmenge in den Schaufelraum eingebracht, wobei der drehende Rotor das Öl mitnimmt, das sich am Stator abstützt, wodurch eine Bremswirkung auf die Rotorwelle erzeugt wird.

Ein Beispiel einer Bremsanlage mit einem hydrodynamischen Retarder ist in der DE-C-198 53 830 beschrieben. Der hydrodynamische Retarder weist dabei einen Rotor und einen Stator auf, die ihrerseits einen Arbeitsraum miteinander bilden sowie eine Kühleinrichtung zum Kühlen des Arbeitsmediums, einen Vorratsbehälter zur Aufnahme des Arbeitsmediums und eine Steuereinrichtung zum Aufbringen eines Druckes auf das im Vorratsbehälter enthaltene Arbeitsmedium zwecks Einstellens des Kühlungsgrades des Arbeitsraumes, wobei Retarder und Kühleinrichtung im Bremsbetrieb in Sinne eines Kreislaufes vom Arbeitsmedium durchströmt werden. Das gesamte im Vorratsbehälter enthaltene Arbeitsmedium wird zur besseren Wärmeabfuhr in den Kreislauf eingebracht, wobei der Vorratsbehälter als Bestandteil des Kreislaufes durchströmt wird. Damit wird erreicht, dass sich das Arbeitsmedium aufgrund der nunmehr größeren aktiven Menge langsamer erwärmt, da die im Vorratsbehälter verbleibende Menge des Arbeitsmediums, die bis zu 50% der Gesamtölmenge betragen kann, zur Wärmeabfuhr mit herangezogen wird.

Derartige Retarder weisen jedoch den Nachteil auf, dass im ausgeschalteten Zustand des Retarders eine Verlustleistung, beispielsweise aufgrund von Luftzirkulation entsteht, die erheblichen Einfluß haben kann.

Es ist bekannt, im Leerlaufzustand Strömungshindernisse im Torusraum zwischen beiden Schaufelrädern anzuordnen, wie beispielsweise Blenden, um eine Zirkulation von Luft oder Strömungsmittel zu verhindern. Dies hat einen erheblichen technischen Aufwand zur Folge, da die Strömungshindernisse entsprechend den Anforderungen bewegt werden müssen.

Des weiteren sind weitere Maßnahmen zur Reduzierung der Leerlaufverluste eines Retarders bekannt, unter anderem die Verwendung eines drehbaren Statorgitters, oder eines axial verschiebbaren Rotors oder Stators. Die Realisierung derartiger Konstruktionen erfordert aber einen großen radialen und/oder axialen Bauraum sowie eine aufwendige Ansteuerungsmechanik.

Die DE 2526663 offenbart beispielsweise einen hydrodynamischen Retarder mit einem Rotor und einem Stator, wobei der Rotor oder Stator gegenüber seinem Trägerteil begrenzt verdrehbar ist und dessen Schaufelkammern untereinander veränderbare Nebenschlussöffnungen aufweisen, die durch die Verdrehung des Rotors oder Stators geöffnet bzw. geschlossen werden, so dass bei einer Öffnung das Strömungsmittel einem abweichenden Strömungsweg folgt, wodurch die Bremswirkung bei jedem Medium verringert wird.

Der vorliegenden Erfindung liegt die Aufgabe zugrunde, einen hydrodynamischen Retarder der eingangs genannten Art anzugeben, der ein sehr geringes Verlustmoment im Leerlauf aufweist.

Des weiteren soll der erfindungsgemäße Retarder kostengünstig herstellbar sein und mit möglicht geringem technischen Aufwand realisierbar sein.

Diese Aufgabe wird durch die Merkmale des kennzeichnenden Teils des Patentanspruchs 1 gelöst. Weitere Ausgestaltungen gehen aus den Unteransprüchen hervor.

Demnach wird vorgeschlagen, mindestens eine Schaufel des Stators und/oder des Rotors derart auszubilden, dass sie aus zwei Segmenten besteht, wobei das zweite Segment drehbar in einer parallel zur Schaufel liegenden Aufnahmebohrung gelagert ist. Die Drehachse ist erfindungsgemäß so gewählt, dass sich das drehbare Schaufelsegment im Bremsbetrieb durch den Ölstrom parallel zur feststehenden Schaufel hin dreht und sich darauf abstützt.

Im Nichtbremsbetrieb wird das Schaufelsegment durch eine im Zentrum des Stators bzw. Rotors angeordnete Feder in eine den Luftstrom störende Position zurückgedreht. Gemäß der Erfindung erfolgt die Verdrehung vorzugsweise über eine an der drehbaren Schaufel angebrachte Gleitfläche. Als Rückstellmechanismen kann eine zentrale Tellerfeder-Anordnung oder auch andere Mittel, wie beispielsweise einzelne Ringfedern o. ä. eingesetzt werden.

Die erfindungsgemäße Konstruktion weist zudem den Vorteil auf, dass ein geringer axialer sowie radialer Bauraum erforderlich ist.

Außerdem gestaltet sich die Fertigung sehr einfach, da nur Bohr- und Drehprozesse benötigt werden und keine radiale Fixierung der Einzelsegmente nötig ist, weil die Position durch das angrenzende Gehäuse sichergestellt wird.

Ferner wird auf einen aufwendigen Betätigungsmechanismus verzichtet, da der ohnehin vorhandene Ölmassen- bzw. Strömungsmittelstrom als Betätigungsmechanismus fungiert.

Gemäß einer bevorzugten Ausführungsform der vorliegenden Erfindung ist eine zentrale Rückstellung durch eine Feder für alle Schaufeln vorgesehen.

Als besonders vorteilhaft erweist sich ein verschleißfester Werkstoff insbesondere für die drehbaren Schaufeln, der einen störungsfreien Betrieb ermöglicht.

Im folgenden wird die Erfindung anhand der beigefügten Zeichnung näher erläutert.
In dieser stellen dar:
- Fig. 1: eine schematische Darstellung einer gemäß der Erfindung aus zwei Segmenten bestehenden Schaufel im Bremsbetrieb;
- Fig. 2: eine schematische Darstellung einer gemäß der Erfindung aus zwei Segmenten bestehenden Schaufel im Nichtbremsbetrieb und
- Fig. 3: eine geschnittene Ansicht auf die Aufnahmebohrung und den Rückstellmechanismus gemäß der Erfindung in einer dem Bremsbetrieb entsprechenden Anordnung.

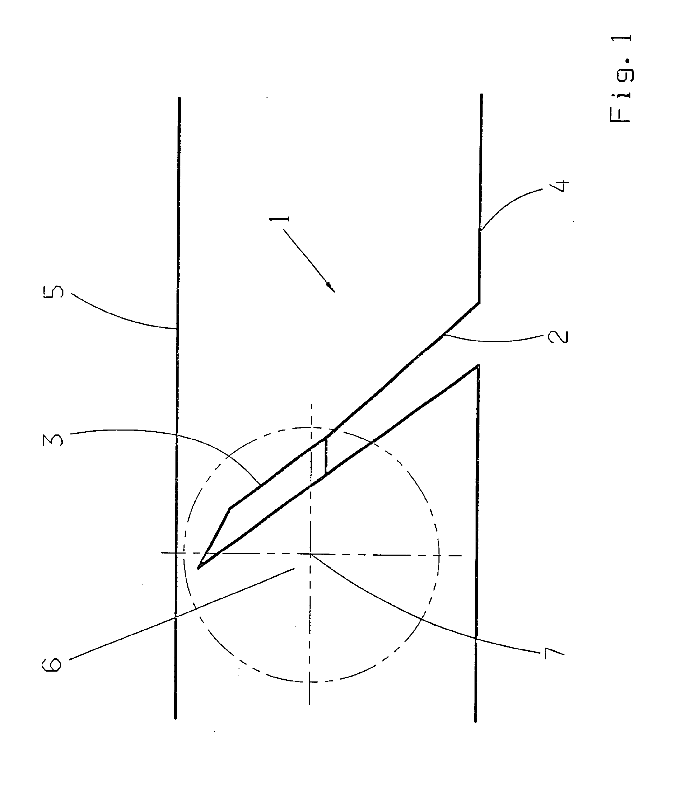

Wie in Fig. 1 gezeigt, werden die Schaufeln 1 derart ausgebildet, dass sie aus zwei Segmenten 2, 3 bestehen. Hierbei ist das erste Segment 2 direkt mit dem Grundteil und vorzugsweise dem Stator 4 oder (nicht dargestellt) dem Rotor 5 verbunden. Im Rahmen einer besonders vorteilhaften Ausgestaltung ist das erste Segment am Stator 4 oder Rotor 5 angegossen.

Das zweite Schaufelsegment 3 ist gemäß der Erfindung drehbar in einer parallel zur Schaufel 1 liegenden Aufnahmebohrung 6 gelagert. Die Drehachse 7 ist so gewählt, dass sich das drehbare Schaufelsegment 3 im Bremsbetrieb durch den Ölstrom parallel zur feststehenden Schaufel 1 hin dreht und sich abstützt, so dass die Bremsleistung maximiert wird.

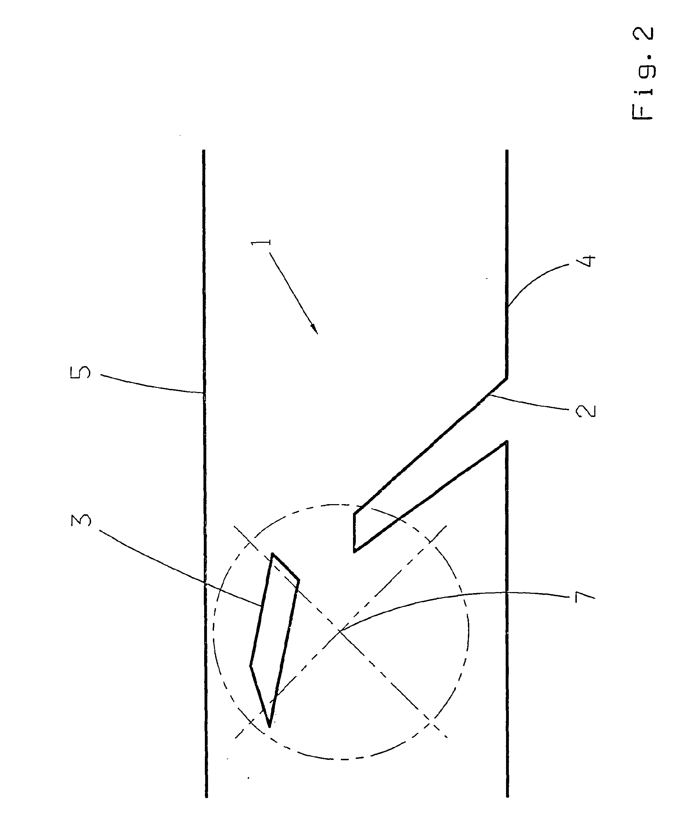

Im Nichtbremsbetrieb, gezeigt in Fig. 2, wird das zweite, drehbar gelagerte Schaufelsegment 3 erfindungsgemäß durch eine im Zentrum des Stators 4 oder des Rotors 5 angeordnete Feder, vorzugsweise eine Tellerfeder-Anordnung (nicht dargestellt), in eine den Luftstrom störende Position zurückgedreht, wobei die Verdrehung vorzugsweise über eine an der drehbaren Schaufel (3) angebrachte Gleitfläche erfolgt. Im Rahmen einer weiteren Variante enthält der Rückstellmechanismus des drehbaren Schaufelsegmentes (3) einzelne Federn, z.B. Ringfedern.

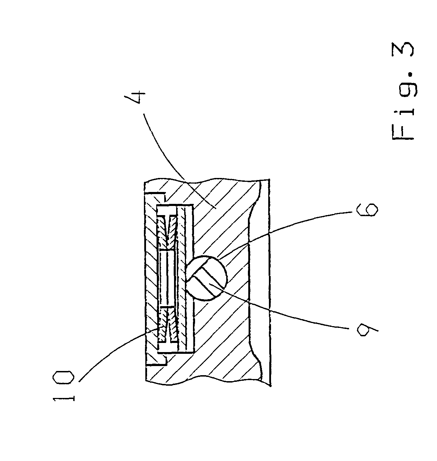

Fig. 3 zeigt eine geschnittene Ansicht auf die Aufnahmebohrung 6 und den Rückstellmechanismus 8 im Bremsbetrieb. In der Aufnahmebohrung ist ein drehbarer Bolzen 9 vorgesehen, an dem das drehbare Schaufelsegment 3 (nicht dargestellt) gelagert ist. Der Bolzen ist mit einer Tellerfeder 10 verbunden, derart, dass das Schaufelsegment 3 im Nichtbremsbetrieb in eine den Luftstrom störende Position zurückgedreht wird.

Die Rückstellmechanismus 8 ist so dimensioniert, dass eine Rückstellung nur dann erfolgt, wenn der Torusraum entleert ist.

Die erfindungsgemäße Ausgestaltung der Schaufelsegmente kann am Rotor- und/oder am Statorschaufelrad erfolgen, wobei je nach Bedarf sämtliche oder ein Teil der Schaufeln drehbar ausgebildet sein können.

### Bezugszeichen

- 1: Schaufel
- 2: erstes Schaufelsegment
- 3: zweites drehbar gelagertes Schaufelsegment
- 4: Stator
- 5: Rotor
- 6: Aufnahmebohrung
- 7: Drehachse
- 8: Rückstellmechanismus
- 9: Bolzen
- 10: Tellerfeder

## Patentansprüche

1. Hydrodynamischer Retarder für ein Kraftfahrzeug,
mit einem Rotor- und Statorschaufelrad, **dadurch gekennzeichnet, dass** mindestens eine Schaufel (1) des Stators (4) und/oder des Rotors (5) aus zwei Segmenten (2, 3) besteht, wobei das erste Segment (2) direkt mit dem Stator (4) und/oder dem Rotor (5) verbunden und das zweite Segment (3) drehbar gelagert ist, wobei die Drehachse (7) so gewählt ist, dass sich das drehbare Schaufelsegment (3) im Bremsbetrieb durch den Strömungsmittelstrom parallel zur feststehenden Schaufel (2) hin drehbar ist und sich darauf abstützt und im Nichtbremsbetrieb in eine den Strömungsmittelstrom störende Position rückstellbar ist.

2. Hydrodynamischer Retarder nach Anspruch 1, **dadurch gekennzeichnet, dass** das zweite Segment (3) drehbar in einer parallel zur Schaufel liegenden Aufnahmebohrung (6) gelagert ist.

3. Hydrodynamischer Retarder nach Anspruch 1 oder 2,
**dadurch gekennzeichnet, dass** die Rückstellung des zweiten Schaufelsegmentes (3) über eine Gleitfläche mittels eines Rückstellmechanismus (8) erfolgt.

4. Hydrodynamischer Retarder nach Anspruch 3, **dadurch gekennzeichnet, dass** der Rückstellmechanismus (8) der zweiten drehbar gelagerten Schaufelsegmente eine zentrale Tellerfeder-Anordnung (10) ist.

5. Hydrodynamischer Retarder nach Anspruch 3, **dadurch gekennzeichnet, dass** der Rückstellmechanismus (8) der zweiten drehbar gelagerten Schaufelsegmente (3) einzelne Ringfedern enthält.

6. Hydrodynamischer Retarder nach einem der vorangehenden Ansprüche, **dadurch gekennzeichnet, dass** der Rückstellmechanismus (8) derart dimensioniert ist, dass eine Rückstellung bei leerem Torusraum erfolgt.

7. Hydrodynamischer Retarder nach einem der vorangehenden Ansprüche, **dadurch gekennzeichnet, dass** die Schaufeln (1) ganz oder teilweise aus einem verschleißfesten Werkstoff bestehen.
